# DEMANDE DE BREVET EUROPEEN

(11) **EP 2 740 992 A1**
(43) Date de publication de la demande: **11.06.2014**
(21) Numéro de dépôt: 13195914.0
(22) Date de dépôt: 05.12.2013
(51) Int. Cl.: F21S 8/10, F21V 19/00, F21V 29/00, F21V 21/30, F21Y 101/02, B60Q 1/20

(54) **Dispositif d'émission de lumière pour projecteur de véhicule automobile et projecteur équipé dudit dispositif**

(30) Priorité: 07.12.2012 FR 1261775
(71) Demandeur: VALEO ILUMINACION,, 23600 Martos (ES)
(72) Inventeur: Puente, Jean-Claude, 93190 LIVRY GARGAN (FR); Moisy, Eric, 23009 JAEN (ES); Jacq, Alain, 94170 LE PERREUX SUR MARNE (FR); Gomez, Carlos, 23600 Martos (ES)

(57) **Abrégé**

L'invention concerne un dispositif (1) d'émission de lumière pour projecteur (2) de véhicule automobile, ledit dispositif (1) d'émission de lumière comprenant une source lumineuse(4) et un boîtier (6), définissant un logement (8) pour ladite source lumineuse (4), ladite source lumineuse (4) étant en contact thermique avec le boîtier (6), ledit boîtier (6) étant configuré pour permettre une dissipation thermique de la chaleur dégagée par ladite source lumineuse (4), remarquable en ce que le boîtier (6) comprend une nervure creuse (18).

L'invention concerne également un projecteur (2), notamment pour véhicule automobile, comprenant ledit dispositif (1) d'émission de lumière.

## Description

La présente invention concerne un dispositif d'émission de lumière pour projecteur de véhicule automobile, ainsi qu'un projecteur équipé dudit dispositif. Bien que plus particulièrement prévue pour une utilisation dans des feux antibrouillard, l'invention pourra aussi être utilisée dans des feux de route, feux de croisement ou tout autre type de projecteur de véhicule servant à éclairer la chaussée.

Il est connu des projecteurs utilisant des diodes électroluminescentes comme sources lumineuses. Bien que de telles sources soient parfois qualifiées de sources froides car elles ne produisent pas ou peu de chaleur radiante, elles nécessitent d'être refroidies. En effet, une élévation trop importante de la température nuit à l'intensité du faisceau émis. De plus, elle fait peser un risque sur leur alimentation en courant, car cette dernière est réalisée grâce à une jonction qui deviendrait défectueuse si la température dépassait un certain seuil.

Pour résoudre ce problème, il est aujourd'hui connu de munir de tels projecteurs d'un dispositif de dissipation thermique tel qu'un radiateur à ailettes, en relation d'échange thermique avec les diodes. Une ouverture est ménagée dans le boîtier du projecteur afin que le radiateur puisse déboucher hors de celui-ci et échanger de la chaleur par convection naturelle avec l'air ambiant, extérieur au boîtier.

Une telle solution augmente le nombre de pièces à mettre en oeuvre. De plus, elle présente un caractère esthétique limité, qui ne porte certes pas à conséquence tant que le boîtier du projecteur est dissimulé sous la carrosserie du véhicule, mais qui n'est pas satisfaisante lorsque le projecteur est visible, notamment dans le cas de projecteurs additionnels, c'est-à-dire de projecteurs destinés à être montés à l'extérieur du véhicule.

L'invention a pour but de pallier les inconvénients précités et propose en ce sens un dispositif d'émission de lumière et d'éclairage de la chaussée pour véhicule automobile, ledit dispositif d'émission de lumière comprenant une source lumineuse et un boîtier, définissant un logement pour ladite source lumineuse, ladite source lumineuse étant en contact thermique avec ledit boîtier, ledit boîtier étant configuré pour permettre une dissipation thermique de la chaleur dégagée par ladite source lumineuse.

En utilisant le boîtier comme dissipateur thermique, le nombre de pièces est limité. On évite en outre l'emploi d'une pièce débouchant à travers le boîtier et on facilite de la sorte l'obtention d'un projecteur présentant une esthétique plus soignée.

Selon différentes caractéristiques de l'invention qui pourront être prise ensemble ou séparément :
- ledit dispositif d'émission de lumière est configuré pour concentrer un faisceau lumineux émis par ladite source lumineuse de façon à former le faisceau émis par ledit dispositif,
- ledit dispositif d'émission de lumière comprend un réflecteur permettant de réfléchir une partie du faisceau émis par ladite source lumineuse de façon à former ledit faisceau émis par ledit dispositif,
- ladite source lumineuse comprend au moins une diode électroluminescente,
- ledit boîtier comprend au moins une nervure creuse augmentant la surface d'échange,
- ladite nervure creuse est orientée vers l'intérieur et/ou l'extérieur du boîtier,
- ladite nervure creuse comprend deux flancs raccordés par un fond,
- ladite nervure creuse, vue de l'extérieur du boîtier, forme une gorge,
- ladite source lumineuse est prévue au niveau de ladite nervure creuse,
- ladite nervure creuse est issue de matière dudit boîtier,
- ladite nervure creuse est configurée pour que ladite source lumineuse se trouve sensiblement au niveau d'un foyer du réflecteur,
- ledit réflecteur et ladite nervure creuse sont mutuellement configurés pour permettre un centrage dudit réflecteur sur ledit boîtier,
- ladite nervure creuse est garnie d'ailettes de dissipation thermique,
- lesdites ailettes sont situées dans ladite gorge,
- lesdites ailettes se situent à l'extérieur du logement défini par ledit boîtier,
- lesdites ailettes se situent dans un encombrement dudit boîtier, c'est-à-dire qu'elles ne sont pas en proéminence de la surface externe du boitier,
- ladite nervure creuse présente un axe d'extension longitudinale,
- lesdites ailettes sont transversales à ladite direction d'extension de la nervure creuse,
- lesdites ailettes s'étendent depuis le fond de ladite nervure creuse jusqu'à des bords de ses flancs, opposés audit fond, et/ou d'un desdits flancs à l'autre,
- lesdites ailettes sont au moins prévues au voisinage d'une partie de ladite nervure creuse portant la source lumineuse,
- lesdites ailettes sont régulièrement réparties le long de ladite nervure creuse,
- ledit boîtier comprend des brides de fixation à un support, situées de part et d'autre de ladite nervure creuse, à l'une de ses extrémités.

On peut remarquer que si l'étendue des surfaces d'échanges thermiques formées par les ailettes évoquées plus haut est limitée, cette difficulté est compensée par la température de l'air ambiant au contact des surfaces d'échange, au moins dans le cas de projecteurs additionnels. En effet, contrairement aux projecteurs situés à demeure sur les véhicules, pour lesquels la partie de dissipation thermique est située sous capot, c'est-à-dire dans un milieu où la température est traditionnellement élevée en raison des calories dégagées par le moteur du véhicule, les projecteurs sont ici destinés à être placés dans l'air extérieur ambiant, c'est-à-dire dans un milieu dont la température est généralement fraîche, voire froide, dans les conditions dans lesquels les projecteurs sont généralement utilisés, de nuit ou en cas de brouillard.

L'invention concerne encore un projecteur de véhicule automobile comprenant le dispositif d'émission de lumière tel que décrit plus haut.

D'autres caractéristiques et avantages de l'invention apparaîtront à la lecture de la description détaillée qui suit, pour la compréhension de laquelle on se reportera aux dessins annexés, parmi lesquels :
- la figure 1 est une vue en perspective éclatée d'un exemple de réalisation du dispositif d'émission de lumière et du projecteur selon l'invention ;
- la figure 2 illustre de façon schématique, selon un plan de coupe radiale, le dispositif d'émission et le projecteur de la figure 1 ;
- la figure 3 est une vue en perspective, par l'arrière, du dispositif d'émission et du projecteur de la figure 1.

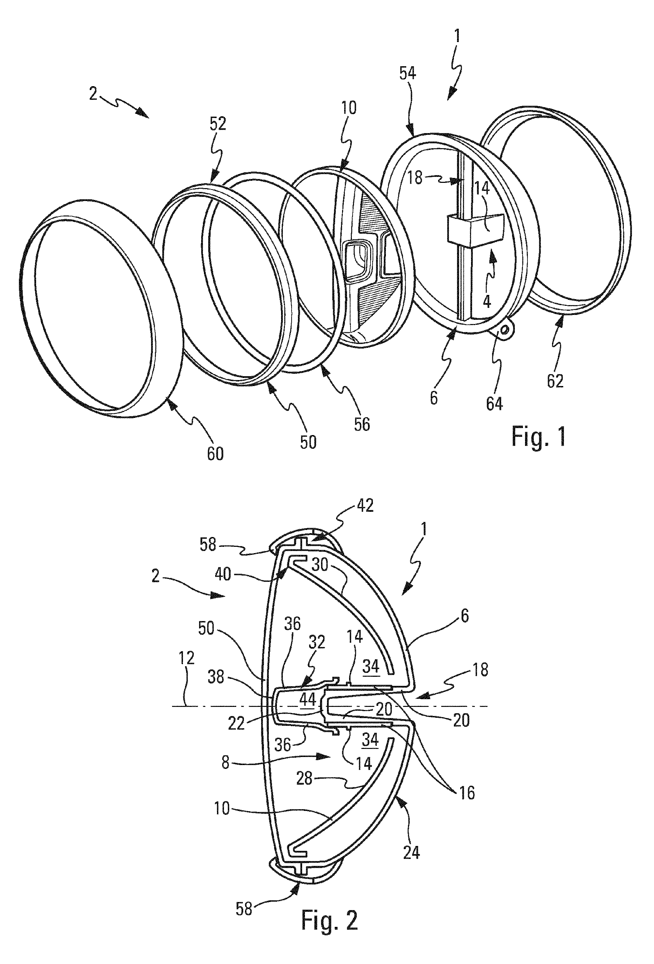

Comme illustré aux figures 1 et 2, l'invention concerne tout d'abord un dispositif 1 d'émission de lumière pour projecteur 2 de véhicule automobile.

Ce dispositif 1 d'émission de lumière comprend une source lumineuse 4 et un boîtier 6, définissant un logement 8 pour ladite source lumineuse 4.

Ce dispositif 1 d'émission de lumière est avantageusement configuré pour concentrer un ou des faisceaux lumineux émis par ladite source lumineuse 4. Il comprend ici pour cela un réflecteur 10 permettant de réfléchir le ou les faisceaux émis par ladite source lumineuse 4. Il pourra bien sûr comprendre, de façon alternative ou combinée, tout autre élément optique, tels que des lentilles, permettant de diriger en l'intensifiant le ou les faisceaux émis par ladite source lumineuse 4. On forme de la sorte le faisceau émis par ledit dispositif 1 d'émission de lumière qui pourra en particulier se trouver à l'intérieur d'un cône d'émission centré sur un axe optique 12 dudit dispositif d'émission de lumière.

Ladite source lumineuse 4 comprend au moins une diode électroluminescente 14. Elles sont ici au nombre deux. Elles sont placées, par exemple, sur un support 16 tel que, notamment, un substrat métallique isolé, permettant l'alimentation électrique desdites diodes 14. Lesdits supports 16 pourront également intégrer des composants électroniques, non-visibles, participant à la commande desdites diodes 14.

Selon l'invention, la source lumineuse 4 est en contact thermique avec le boîtier 6, ce dernier étant configuré pour permettre une dissipation thermique de la chaleur dégagée par ladite source lumineuse 4.

Le boîtier 6 pourra pour cela être réalisé, par exemple, en matériau métallique, tel que de l'aluminium ou un alliage d'aluminium ou tout autre métal ou alliage métalliques présentant une bonne conductivité thermique. Comme développé dans la suite, il présente avantageusement une ou des formes favorisant la présence de surfaces d'échange thermique avec l'air ambiant.

On dispose de la sorte d'une solution dans laquelle la fonction de refroidissement de la source lumineuse 4 est assurée par le boîtier 6 lui-même, ce qui permet de diminuer le nombre de pièces et de donner au projecteur équipé un aspect esthétique avantageux.

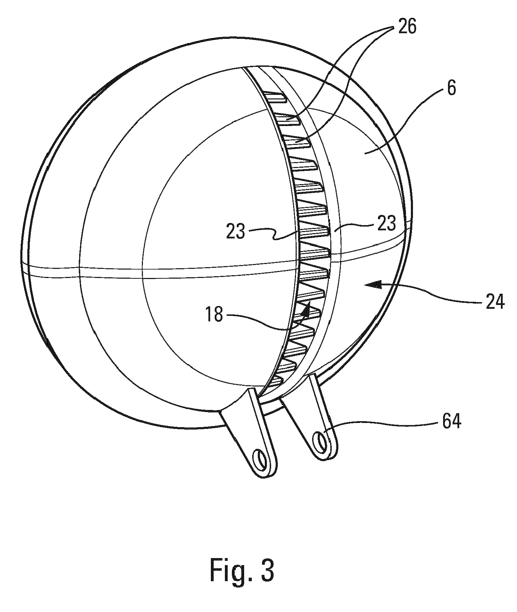

Comme cela est plus particulièrement visible sur les figures 2 et 3, le boîtier 6 pourra comprendre une ou plusieurs nervure creuses 18, ici une seule, au niveau de la ou desquelles ladite source lumineuse 4 est prévue. A la figure 2, la nervure creuse 18 est orientée orthogonalement au plan de coupe. Elle comprend des flancs 20, ici reliés par un fond 22, réalisant une première augmentation de la surface d'échange thermique offerte par le boîtier 6. La nervure creuse 18 présente une section en U, lesdits flancs 20 étant sensiblement parallèles.

La nervure creuse 18 est avantageusement issue de matière du boîtier 6. Autrement dit, le boîtier 6 et la nervure creuse 18 forment une seule et même pièce.

Le boîtier 6 comprend, par exemple, un fond 24 présentant une forme de révolution, interrompue par la nervure creuse 18, cette dernière étant située de part et d'autre d'un plan de symétrie passant par l'axe optique 12 dudit dispositif, orthogonal au plan de coupe à la figure 2. La forme du fond 24 dudit boîtier 6 correspond, par exemple, à une calotte de sphère et/ou d'ellipsoïde de révolution.

Les flancs 20 de ladite nervure creuse 18 présentent ainsi des bords externes 23 sous forme d'arc de cercle et/ou d'ellipse. Lesdits flancs 20 se raccordent ici au fond 22 de ladite nervure creuse 18 de façon rectiligne. Ce dernier est légèrement bombé vers l'intérieur du logement 8.

Pour améliorer encore l'échange thermique, ladite nervure creuse 18 pourra être garnie d'ailettes 26 de dissipation thermique. Elles sont situées ici à l'extérieur dudit logement 8 défini par ledit boîtier 6.

Avantageusement, l'extension données auxdites ailettes 26 les limite dans l'encombrement donné par le fond 24 dudit boîtier 6 : les ailettes 26 ne dépassent pas au-delà de la surface externe du boitier 6. Ce niveau d'intégration contribue à donner au dispositif conforme à l'invention un aspect esthétique favorable.

Plus précisément, la nervure creuse 18 présente ici un axe d'extension longitudinale, orthogonal à l'axe optique 12, et lesdites ailettes 26 sont transversales à ladite direction d'extension longitudinale de la nervure creuse 18. Elles s'étendent, par exemple, depuis le fond 22 de ladite nervure creuse 18 jusqu'à ses bords 23 et/ou d'un flanc 20 de ladite nervure creuse 18 à l'autre.

En variante, elles pourraient être parallèles audit axe d'extension ou présenter tout autre orientation favorable à une circulation de l'air par convection naturelle.

Les ailettes 26 sont au moins prévues au voisinage d'une partie de ladite nervure creuse 18 portant la source lumineuse 4, en particulier au niveau desdits supports 16. Les ailettes 26 sont ici régulièrement réparties le long de la nervure creuse 18. Toute autre distribution est cependant possible.

Pour améliorer encore l'aspect esthétique du boîtier 6, celui-ci présentera avantageusement une surface extérieure lisse, c'est-à-dire sans formes ou autres ailettes destinées à augmenter la surface d'échange thermique, en dehors de la ou desdites nervure creuses 18.

Si l'on se reporte de nouveau aux figures 1 et 2, on constate que le réflecteur 10 pourra présenter un ou plusieurs foyers et que la nervure creuse 18 est configurée pour que la source lumineuse 4, à savoir ici les diodes 14, se trouve sensiblement au niveau desdits foyers. Le réflecteur 10 pourra en particulier être configuré pour que les rayons lumineux émis par les diodes 14 soient réfléchis parallèlement les uns aux autres, dans la direction de l'axe optique 12. Le réflecteur 10 comprend ici pour cela deux fonds 28, 30 en forme de portions de paraboloïde de révolution.

Le réflecteur 10 et la nervure creuse 18 du boîtier 6 pourront être mutuellement configurés pour permettre un centrage dudit réflecteur 10 sur ledit boîtier 6. Le réflecteur 10 pourra en particulier être muni d'une nervure creuse 32, coiffant la nervure creuse 18 du boîtier 6, ladite nervure creuse 32 du réflecteur 10 reliant les parties de fonds 28, 30 dudit réflecteur 10. Ladite nervure creuse 32 du réflecteur 10 est munie d'une ou plusieurs fenêtres 34 de passage du faisceau émis par ladite source lumineuse, ici situées en vis-à-vis desdites diodes 14.

Le réflecteur 10 pourra être symétrique par rapport au plan de symétrie évoqué plus haut. Sa nervure creuse 32 comprend, par exemple, deux flancs 36, dans lesquels sont respectivement ménagées lesdites fenêtres 34. Lesdits flancs 36 de cette nervure creuse 32 du réflecteur 10 sont reliés, notamment, par un fond 38, ici légèrement convexe.

Ce réflecteur 10 présente un bord périphérique 40, en saillie par un rapport à un bord périphérique 42 du boîtier 6. Le fond 38 de ladite nervure creuse 32 du réflecteur 10 est en saillie par rapport au bord périphérique 40 du réflecteur 10. Le fond 22 de la nervure creuse 18 du boîtier 6 est en retrait par rapport audit bord périphérique 42 du boîtier 6. Ledit dispositif 1 d'émission lumineuse comprend une cavité 44 entre le fond 22 de la nervure creuse 18 du boîtier 6 et ladite nervure creuse 32 du réflecteur 10.

L'invention concerne également un projecteur 2 comprenant ledit dispositif d'émission 1.

En référence à la figure 1 , le projecteur 2 pourra en outre comprendre une glace de fermeture 50 et une éventuelle pièce de style, ou cache, située entre ladite glace de fermeture 50 et ledit réflecteur 10, selon l'axe optique dudit dispositif d'émission.

Ladite glace 50 et/ou ledit boîtier 6 pourront comprendre chacun une lèvre 52, 54 d'appui l'un sur l'autre. Ils sont assujettis l'un à l'autre, par exemple, par un adhésif double face 56, ici placés entre lesdites lèvres 52, 54.

Le projecteur 2 comprend en outre, un anneau d'habillage 58, par exemple, en deux parties annulaires 60, 62, jointes axialement l'une à l'autre. Cet anneau 58 permet en particulier de dissimuler la liaison entre la glace 50 et le boîtier 6.

Le boîtier 6 pourra comprendre des brides 64 de fixation à un support, en particulier un support monté sur un véhicule automobile, non-représenté. Lesdites brides 64 sont situées ici de part et d'autre de ladite nervure creuse 18 dudit boîtier 6, à l'une de ses extrémités longitudinale. Elles sont configurées pour permettre, en utilisation, un réglage de l'inclinaison du faisceau émis par le projecteur 2 par rapport à l'horizontale.

Le projecteur 2 pourra en particulier être utilisé comme antibrouillard, bien que cette application ne doive nullement être considérée comme limitative.

## Revendications

1. Dispositif (1) d'émission de lumière pour projecteur (2) de véhicule automobile, ledit dispositif (1) d'émission de lumière comprenant une source lumineuse (4) et un boîtier (6), définissant un logement (8) pour ladite source lumineuse (4), ladite source lumineuse (4) étant en contact thermique avec ledit boîtier (6), ledit boîtier (6) étant configuré pour permettre une dissipation thermique de la chaleur dégagée par ladite source lumineuse (4) **caractérisé en ce que** le boîtier (6) comprend une nervure creuse (18).

2. Dispositif (1) d'émission de lumière selon la revendication 1, dans lequel ladite source lumineuse (4) comprend au moins une diode électroluminescente (14).

3. Dispositif (1) d'émission de lumière selon l'une quelconque des revendications 1 ou 2, dans lequel ladite source lumineuse (4) est prévue au niveau de ladite nervure creuse (18).

4. Dispositif(1) d'émission de lumière selon l'une quelconque des revendications précédentes, comprenant en outre un réflecteur (10) présentant un foyer, ledit réflecteur (10) permettant de réfléchir une partie du faisceau émis par ladite source lumineuse (4) de façon à former le faisceau émis par ledit dispositif.

5. Dispositif (1) d'émission de lumière selon la revendication 4, dans lequel la nervure creuse (18) est configurée pour que la source lumineuse (4) se trouve sensiblement au niveau du foyer.

6. Dispositif (1) d'émission de lumière selon l'une quelconque des revendications 4 ou 5, dans lequel le réflecteur (10) et la nervure creuse (18) sont mutuellement configurés pour permettre un centrage dudit réflecteur (10) sur ledit boîtier (6).

7. Dispositif (1) d'émission de lumière selon l'une quelconque des revendications 1 à 6, dans lequel la nervure creuse (18) est garnie d'ailettes (26) de dissipation thermique.

8. Dispositif (1) d'émission de lumière selon la revendication 7, dans lequel lesdites ailettes (26) se situent à l'extérieur dudit logement (8) défini par ledit boîtier (6).

9. Dispositif (1) d'émission de lumière selon la revendication 8, dans lequel lesdites ailettes (26) se situent dans un encombrement dudit boîtier (6).

10. Dispositif (1) d'émission de lumière selon l'une quelconque des revendications 7 à 9, dans lequel ladite nervure creuse (18) présente un axe d'extension longitudinale.

11. Dispositif (1) d'émission de lumière selon la revendication 10, dans lequel lesdites ailettes (26) sont transversales à ladite direction d'extension de la nervure creuse (18).

12. Dispositif (1) d'émission de lumière selon la revendication 11, dans lequel les ailettes (26) sont au moins prévues au voisinage d'une partie de la nervure creuse (18) portant la source lumineuse (4).

13. Dispositif (1) d'émission de lumière selon la revendication 12, dans lequel lesdites ailettes (26) sont régulièrement réparties le long de la nervure creuse (18).

14. Dispositif (1) d'émission de lumière selon l'une quelconque des revendications précédentes, dans lequel le boîtier (6) comprend des brides de fixation (64) à un support, situées de part et d'autre de ladite nervure creuse (18), à l'une de ses extrémités.

15. Projecteur (2) de véhicule automobile comprenant le dispositif (1) d'émission de lumière selon l'une quelconque des revendications précédentes.
